# EUROPÄISCHE PATENTANMELDUNG

(11) **EP 2 193 951 A1**
(43) Veröffentlichungstag der Anmeldung: **09.06.2010**
(21) Anmeldenummer: 09014777.8
(22) Anmeldetag: 27.11.2009
(51) Int. Cl.: B60K 17/10, B60K 17/356, F16H 61/44, F16H 39/02

(54) **Fahrantrieb**

(30) Priorität: 02.12.2008 DE 102008060086
(71) Anmelder: Robert Bosch GmbH, 70469 Stuttgart (DE)
(72) Erfinder: Reiblein, Steffen, 76707 Hambrücken (DE); Essig, Heinz-Gerhard, 89173 Lonsee (DE)
(74) Vertreter: Thürer, Andreas

(57) **Zusammenfassung**

Offenbart ist ein Fahrantrieb für ein Fahrzeug mit einem Fahrzeugmotor, der eine Motorwelle aufweist, die über eine Kupplung mit einem Getriebe verbundenen ist. Dabei ist eine von einer Abtriebswelle des Getriebes antreibbare hydraulische Konstantpumpe vorgesehen, von der über zumindest einen hydraulischen Konstantmotor ein damit verbundenes Fahrzeugrad antreibbar ist. Der erfindungsgemäße Fahrantrieb hat weiterhin zumindest eine hydraulische Verstellpumpe, die direkt von der Motorwelle des Fahrzeugmotors angetrieben wird. Von dieser bzw. diesen Verstellpumpe(n) wird ebenfalls über den zumindest einen Konstantmotor das damit verbundene Fahrzeugrad angetrieben. Dadurch ist mit geringem vorrichtungstechnischem Aufwand (insbesondere bei den Druckleitungen, Kupplungen und den Ventilen) eine maximale Flexibilität des Zusatzantriebes geschaffen. Weiterhin können die zusätzliche angetriebenen Fahrzeugräder mit einem Drehmoment beaufschlagt werden, auch wenn sich der Fahrzeugmotor im Leerlauf befindet und/oder über das Getriebe noch kein Gang eingelegt ist.

## Beschreibung

Die Erfindung betrifft einen Fahrantrieb gemäß dem Oberbegriff des Patentanspruchs 1.

Die Druckschrift DE 36 10 774 C1 zeigt einen Fahrantrieb für Fahrzeuge, bei dem eine übliche mechanische Antriebsverbindung zwischen einer Brennkraftmaschine und hinteren Rädern des Fahrzeugs vorgesehen ist. Zusätzlich ist ein hydraulischer Zusatzantrieb mit einer hydraulischen Hauptpumpe und einer hydraulischen Speisepumpe mit der Abtriebswelle der Brennkraftmaschine verbunden, wobei die beiden Pumpen nicht verstellbar, nicht umkehrbar und nicht auskuppelbar sind. Die Speisepumpe fördert in die Saugseite der Hauptpumpe. Durch diese Anordnung werden Radnabenmotoren der beiden Vorderräder des Fahrzeugs angetrieben, wobei die Drehrichtung und die Leistung der Radnabenmotoren durch Ventile einstellbar sind.

In der DE 35 45 481 C2 ist ein ähnlicher Fahrantrieb offenbart. Der Zusatzantrieb ist ebenfalls als hydrostatischer Einzelradantrieb ausgebildet, der eine an der Abtriebswelle des Getriebes angeordnete drehrichtungsumkehrbare Hauptpumpe und eine an der Abtriebswelle der Brennkraftmaschine angeordnete nicht drehrichtungsumkehrbare Hilfspumpe hat. Beide Pumpen sind aus- und einkuppelbar und nicht verstellbar.

Die DE 299 24 730 U1 zeigt ebenfalls einen Fahrantrieb, bei dem von einer Abtriebswelle eines Getriebes eine nicht kuppelbare Hauptpumpe angetrieben wird. Zusätzlich ist eine kuppelbare Speisepumpe vorgesehen, die von einem Nebenabtrieb der Brennkraftmaschine angetrieben wird. Die Speisepumpe steht über (nicht gezeigte) Ventile in Verbindung mit der Druck- und,mit der Saugseite der Hauptpumpe. Beide Pumpen sind nicht verstellbar.

Nachteilig an derartigen Fahrantrieben sind die Kupplungen und Ventile, die nötig sind, um eine Verstellbarkeit der von den Radnabenmotoren abgegebenen Leistung zu ermöglichen. Durch die Ventile entstehen dabei Leistungsverluste und hohe Investitionskosten.

Dem gegenüber liegt der Erfindung die Aufgabe zu Grunde, mit geringem vorrichtungstechnischem Aufwand eine maximale Flexibilität und Effektivität des Zusatzantriebes zu schaffen.

Diese Aufgabe wird gelöst durch einen Fahrantrieb nach Patentanspruch 1.

Weitere vorteilhafte Ausgestaltungen der Erfindung sind in den abhängigen Ansprüchen beschrieben.

Der erfindungsgemäße Fahrantrieb für ein Fahrzeug hat einen Fahrzeugmotor, der eine Motorwelle aufweist, die über eine Kupplung mit einem Getriebe verbundenen ist. Dabei ist eine von einer Abtriebswelle des Getriebes antreibbare hydraulische Konstantpumpe vorgesehen, von der über zumindest einen hydraulischen Konstantmotor ein damit verbundenes Fahrzeugrad antreibbar ist. Der erfindungsgemäße Fahrantrieb hat weiterhin zumindest eine hydraulische Verstellpumpe, die direkt von der Motorwelle des Fahrzeugmotors angetrieben wird. Von dieser bzw. diesen Verstellpumpe(n) wird ebenfalls über den zumindest einen Konstantmotor das damit verbundene Fahrzeugrad angetrieben. Dadurch ist mit geringem vorrichtungstectinischem Aufwand (insbesondere bei den Druckleitungen, Kupplungen und den Ventilen) eine maximale Flexibilität und Effektivität des Zusatzantriebes geschaffen. Weiterhin können die zusätzlich angetriebenen Fahrzeugräder mit einem Drehmoment beaufschlagt werden, auch wenn sich der Fahrzeugmotor im Leerlauf befindet und/oder über das Getriebe noch kein Gang eingelegt ist.

Eine besonders bevorzugte Weiterbildung des erfindungsgemäßen Fahrantriebes hat zwei Konstantmotoren mit jeweils einem zugeordneten Fahrzeugrad. Dadurch lässt sich der erfindungsgemäße Fahrantrieb bei den üblichen vierrädrigen Fahrzeugen mit zwei standardmäßig und zwei zusätzlich angetriebenen Rädern einsetzen.

Ein besonders bevorzugtes Ausführungsbeispiel des Fahrantriebes hat eine Verstellpumpe, wobei der Hochdruckanschluss der Konstantpumpe und derjenige der Verstellpumpe über eine gemeinsame Leitung mit den Hochdruckanschlüssen der beiden Motoren verbunden sind, während die Niederdruckanschlüsse der beiden Motoren über eine gemeinsame Leitung mit dem Niederdruckanschluss der Konstantpumpe und demjenigen der Verstellpumpe verbunden sind. Dadurch ist eine einfache Variante des erfindungsgemäßen Fahrantriebes geschaffen, bei der die Verstellpumpe die Möglichkeit bietet, einen zweiten Druckmittelstrom zu erzeugen, der den ersten vom Gang des Getriebes und von der Drehzahl des Fahrzeugmotors abhängigen Druckmittelstrom ergänzt.

Ein besonders bevorzugtes alternatives Ausführungsbeispiel hat zwei Verstellpumpen, wobei die Konstantpumpe eine Zweikreis-Konstantpumpe mit zwei Hochdruckanschlüssen und zwei Niederdruckanschlüssen ist. Dabei sind ein Hochdruckanschluss der Zweikreis-Konstantpumpe und der Hochdruckanschluss einer Verstellpumpe mit dem Hochdruckanschluss des einen Konstantmotors verbunden, während der andere Hochdruckanschluss der Zweikreis-Konstantpumpe und der Hochdruckanschluss der anderen Verstellpumpe mit dem Hochdruckanschluss der anderen Motors verbunden sind. Weiterhin wird es besonders bevorzugt, wenn dabei der Niederdruckanschluss des einen Konstantmotors mit dem Niederdruckanschtuss der einen Verstellpumpe und mit einem Niederdruckanschluss der Zweikreis-Konstantpumpe verbunden ist, während der Niederdruckanschluss des anderen Konstantmotors mit dem Niederdruckanschluss der anderen Verstellpumpe und mit dem anderen Niederdruckanschluss der Zweikreis-Konstantpumpe verbunden ist. Dadurch ist eine Variante des erfindungsgemäßen Fahrantriebes geschaffen, bei der die beiden zusätzlich angetriebenen Räder getrennt mit regelbarem Drehmoment beaufschlagt werden können. Durch die getrennten Kreise der Konstantpumpe bietet diese Variante eine lenkbare bzw. in ihrem Kopplungsgrad verstellbare Differenzialsperre.

Dabei wird es weiterhin besonders bevorzugt, wenn die beiden Hochdruckanschlüsse und/oder die beiden Niederdruckanschlüsse der Zweikreis-Konstantpumpe verbindbar sind. Durch die Verbindung(en) kann die Differenzialsperre aufgehoben werden.

Dabei wird es weiterhin besonders bevorzugt, wenn die Zweikreis-Konstantpumpe ein Radialkolbenpumpe ist.

Bei einer besonders bevorzugten Weiterbildung beider Alternativen ist die Konstantpumpe deaktivierbar oder blockierbar.

Dabei wird es besonders bevorzugt, wenn die beiden Konstantmotoren und die zugeordneten Fahrzeugräder in Fahrtrichtung des Fahrzeugs gesehen vorne angeordnet sind und weitere durch die Abtriebswelle des Getriebes antreibbare Fahrzeugräder sind in Fahrtrichtung des Fahrzeugs gesehen hinten angeordnet.

Je nach Auslegung kann es vorteilhaft sein, die Konstantpumpe koaxial mit der Abtriebswelle des Getriebes oder an einem Nebenabtrieb des Getriebes anzuordnen.

Wegen der bekannten Vorteile wird als Fahrzeugmotor eine Brennkraftmaschine bevorzugt.

Im Folgenden werden anhand der Figuren zwei verschiede Ausführungsbeispiele der Erfindung detailliert beschrieben. Es zeigen:
Figur 1 eine schematische Darstellung eines ersten Ausführungsbeispiels des erfindungsgemäßen Fahrantriebes; und
Figur 2 eine schematische Darstellung eines zweiten Ausführungsbeispiels des erfindungsgemäßen Fahrantriebes.

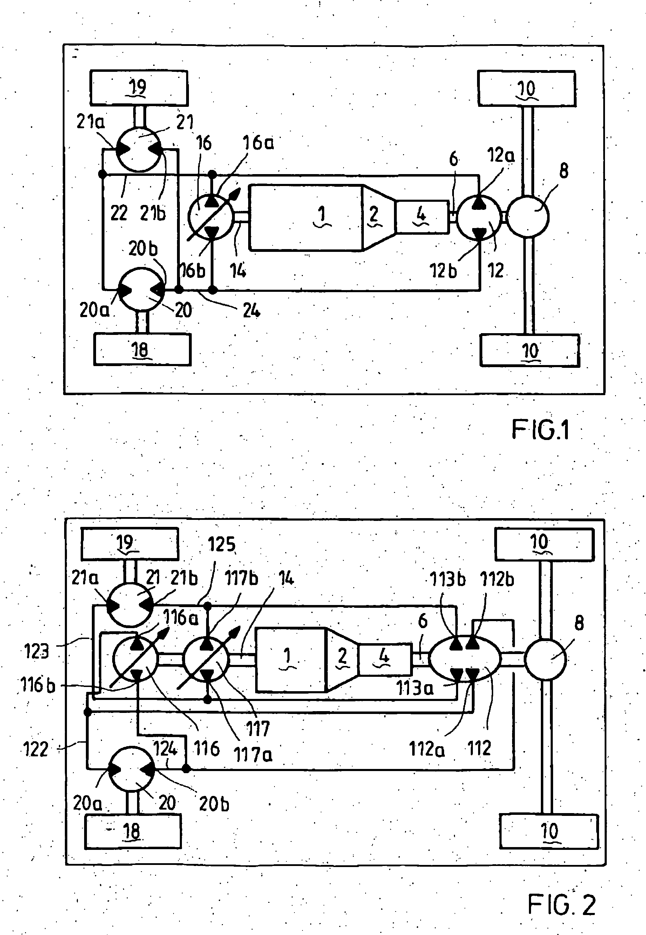

Figur 1 zeigt eine schematische Darstellung eines ersten Ausführungsbeispiels des erfindungsgemäßen Fahrantriebes, der einen als Brennkraftmaschine ausgebildeten Fahrzeugmotor 1 hat, der in der aus dem Stand der Technik bekannten Weise über eine Kupplung 2, ein Getriebe 4, eine Abtriebswelle 6 und ein Differenzialgetriebe 8 zwei Hinterräder 10 eines Fahrzeugs antreibt.

Von der Abtriebswelle 6 wird erfindungsgemäß eine Konstantpumpe 12 angetrieben, deren Förderrichtung entsprechend einer veränderten Drehrichtung der Abtriebswelle 6 geändert werden kann.

Weiterhin ist auf einer Kurbel- bzw. Motorwelle 14, die sich aus dem Fahrzeugmotor 1 heraus auf der der Kupplung 2 abgewandten Seite erstreckt, eine Verstellpumpe 16 angeordnet, deren Förderrichtung auch bei gleichbleibender Drehrichtung der Motorwelle 14 verändert werden kann.

An zwei Vorderrädern 18, 19 des Fahrzeugs ist jeweils ein als Radnabenmotor ausgebildeter Konstantmotor 20, 21 angeordnet, die starr mit den von ihnen angetriebenen Vorderrädern 18, 19 verbunden sind. Entsprechend der Durchflussrichtung des antreibenden Druckmittels sind die Konstantmotoren 20, 21 in ihrer Drehrichtung umkehrbar.

Im Folgenden werden zunächst die Anschlüsse und Leitungen der Pumpen 12, 16 und Motoren 20, 21 des ersten Ausführungsbeispiels gemäß Figur 1 beschrieben und danach die Funktionsweise des erfindungsgemäßen Fahrantriebs erläutert, wobei zunächst von einer Vorwärtsfahrt (in Figur 1 nach links gerichtet) ausgegangen wird.

Die Konstantpumpe 12, die Verstellpumpe 16 und die beiden Konstantmotoren 20, 21 haben jeweils einen Hochdruckanschluss 12a und 16a bzw. 20a und 21a, die über eine gemeinsame Hochdruckleitung 22 miteinander verbunden sind. Dabei ist die Hochdruckleitung 22 einerseits zu den Hochdruckanschlüssen 12a, 16a der eiden Pumpen 12, 16 verzweigt und andererseits zu den Hochdruckanschlüssen 20a, 21 a der beiden Konstantmotoren 20, 21 verzweigt.

Entsprechend ist niederdruckseitig eine Niederdruckleitung 24 angeordnet, die einerseits zu einem Niederdruckanschluss 12b der Konstantpumpe 12 und zu einem Niederdruckanschluss 16b der Verstellpumpe 16 verzweigt, und andererseits zu einem Niederdruckanschluss 20b des Konstantmotors 20 und zu einem Niederdruckanschluss 21b des Konstantmotors 21 verzweigt.

Das erste Ausführungsbeispiel des erfindungsgemäßen Fahrantriebs gemäß Figur 1 hat somit zusätzlich zu den herkömmlich angetriebenen Hinterrädern 10 zwei hydraulisch angetriebene Vorderräder 18, 19, wobei deren Antriebsleistung sich aus der Leistung der Konstantpumpe 12 und der Leistung der Verstellpumpe 16 ergibt. Dabei ist der Druckmittelvolumenstrom der Konstantpumpe 12 abhängig von der jeweiligen Fahrgeschwindigkeit des Fahrzeugs, während der Druckmittelvolumenstrom der Verstellpumpe 16 einerseits von der jeweiligen Drehzahl des Fahrzeugmotors 1 und andererseits von der gewählten Einstellung der Verstellpumpe 16 abhängt. Durch diese erfindungsgemäße Anordnung kann die Leistung der Konstantpumpe 12 durch ein Zuschalten der Verstellpumpe 16 stufenlos verändert werden, wobei auch eine Leistungsverringerung der Konstantpumpe 12 durch eine entgegen gerichtete Förderung möglich ist.

Dabei weisen die beiden Vorderräder 18, 19 die bekannten Vorteile einer Differenzialschaltung (vergleichbar mit denen eines Differenzialgetriebes) auf.

Weiterhin bietet der erfindungsgemäße Fahrantrieb die Möglichkeit, die Vorderräder 18, 19 anzutreiben, bevor bzw. auch ohne dass die Hinterräder 10 angetrieben werden. Bei diesem Betriebszustand steht die Konstantpumpe 12 still, und der Antrieb der Vorderräder 18, 19 erfolgt lediglich über die Verstellpumpe 16.

Bei einer Rückwärtsfahrt (in Figur 1 nach rechts) des Fahrzeugs wird die gesamte Niederdruckseite zur Hochdruckseite und umgekehrt, wobei sich dieser Wechsel bei der Konstantpumpe 12 dadurch ergibt, dass sich die Drehrichtung der Abtriebswelle 6 (entsprechend dem eingelegten Rückwärtsgang) geändert hat, während der Antrieb der Verstellpumpe 16 über die Motorwelle 14 in unveränderter Drehrichtung erfolgt, so dass ihre Förderrichtung über die Verstelleinheit geändert werden muss.

Figur 2 zeigt eine schematische Darstellung eines zweiten Ausführungsbeispiels des erfindungsgemäßen Fahrantriebes. Dabei weist das zweite Ausführungsbeispiel gegenüber dem ersten Ausführungsbeispiel folgende wesentliche Unterschiede auf: Statt der Konstantpumpe 12 ist eine Zweikreis-Konstantpumpe 112 vorgesehen, die ebenfalls von der Abtriebswelle 6 des Getriebes 4 angetrieben wird. Statt der Verstellpumpe 16 sind zwei getrennte Verstellpumpen 116, 117 vorgesehen, die beide von der Motorwelle 14 angetrieben werden.

Das zweite Ausführungsbeispiel hat für jedes Vorderrad 18, 19 bzw. für die entsprechenden Konstantmotoren 20, 21 einen zugeordneten hydraulischen Versorgungskreislauf, der von dem des anderen Rades 18, 19 bzw. Motors 20, 21 getrennt ist. Dazu sind (am Beispiel eines Kreises) ein Anschluss 112a der Zweikreis-Konstantpumpe und ein Anschluss 116a der ersten Verstellpumpe 116 zusammen mit einem Anschluss 20a des ersten Konstantmotors 20 verbunden, während der andere Anschluss 20b des Konstantmotors 20 mit einem Anschluss 112b der Zweikreis-Konstantpumpe und ein Anschluss 116b der ersten Verstellpumpe 116 verbunden ist.

Bei einer Vorwärtsfahrt des Fahrzeugs (in Figur 2 nach links) wird der erste Konstantmotor 20 des Vorderrades 18 über eine Hochdruckleitung 122 und den Hochdruckanschluss 20a mit Druckmittel versorgt. Diese Versorgung erfolgt einerseits über den Hochdruckanschluss 112a des ersten Kreises der Zweikreis-Konstantpumpe 112 und andererseits über den Hochdruckanschluss 116a der ersten Verstellpumpe 116.

Entsprechend erfolgt die Druckmittelversorgung des zweiten Konstantmotors 21 über eine Hochdrurkleitung 123 und den Hochdruckanschluss 21a einerseits über den Hochdruckanschluss 113a des zweiten Kreises der Zweikreis-Konstantpumpe 112 und andererseits über den Hochdruckanschluss 117a der zweiten Verstellpumpe 117.

Niederdruckseitig strömt das Druckmittel aus dem Konstantmotor 20 über seinen Niederdruckanschluss 20b durch die Niederdruckleitung 124 und verzweigt einerseits zu dem Niederdruckanschluss 112b des ersten Kreises der Zweikreis-Konstantpumpe 112 und andererseits zum Niederdruckanschluss 116b der ersten Verstellpumpe 116.

Entsprechend strömt das Druckmittel aus dem Konstantmotor 21 über seinen Niederdruckanschluss 21 b durch die Niederdruckleitung 125 und verzweigt einerseits zum Niederdruckanschluss 113b des zweiten Kreises der Zweikreis-Konstantpumpe 112 und andererseits zum Niederdruckanschluss 117b der zweiten Verstellpumpe 117.

Bei einer Rückwärtsfahrt des Fahrzeugs mit dem Fahrantrieb gemäß dem zweiten Ausführungsbeispiel der vorliegenden Erfindung werden alle Hochdruckanschlüsse 20a, 21a, 112a, 113a, 116a, 117a und die Hochdruckleitungen 122, 123 zu Niederdruckanschlüssen bzw. Niederdruckleitungen und umgekehrt.

Entsprechend dem zweiten Ausführungsbeispiel gemäß Figur 1 müssen zur Rückwärtsfahrt bei gleichbleibender Drehrichtung der Motorwelle 14 die Förderrichtungen der beiden Verstellpumpen 116, 117 über ihre Verstelleinheiten geändert werden, während sich die Förderrichtung der Zweikreis-Konstantpumpe 112 durch Änderung der Drehrichtung der Abtriebswelle 6 ändert.

Durch die beiden getrennten hydraulischen Kreisläufe für den Antrieb jedes einzelnen Vorderrades 18, 19 ist die Möglichkeit einer lenkbaren Differenzialsperre gegeben. Wenn die beiden Verstellpumpen 116, 117 auf gleichmäßiges Fördervolumen eingestellt sind (auch z.B. auf Fördervolumen = 0), ist eine vollkommene Differenzialsperre gegeben.

Ein ungleichmäßiger Antrieb kann stufenlos dadurch erzeugt werden, dass die beiden Verstellpumpen 116, 117 unterschiedlich eingestellt werden. Darüber hinaus ist es möglich, mit einer der Verstellpumpen 116, 117 die Antriebskraft des zugeordneten Vorderrades 18, 19 zu verstärken, während die andere Verstellpumpe 116, 117 die Antriebskraft des zugeordneten Vorderrades 18, 19 abschwächt.

Über die Figur 2 hinaus gehend weist das zweite Ausführungsbeispiel einen ersten (nicht gezeigten) schaltbaren Bypass auf, der die beiden Hochdruckanschtüsse 112a, 113a der Zweikreis-Konstantpumpe 112 wahlweise verbindet oder trennt und optional einen zweiten Bypass zur wahlweise Verbindung der beiden Niederdruckanschlüsse 112b, 113b. Durch den ersten Bypass kann die Differenzialsperre vorzugsweise bei Vorwärtsfahrt komplett deaktiviert werden. Entsprechendes gilt für den zweiten Bypass bei Rückwärtsfahrt. Durch derartige Verbindungsleitungen der beiden hydraulischen Kreise ist die oben beschriebene Differenzialsperre aufgehoben, wodurch die bekannten Vorteile insbesondere bei Kurvenfahrt gegeben sind.

Weiterhin bietet das zweite Ausführungsbeispiel des erfindungsgemäßen Fahrantriebs die Möglichkeit, gleichmäßige oder ungleichmäßige Antriebskräfte auf die Vorderräder 18, 19 zu übertragen, während der Fahrzeugmotor 1 läuft, aber das Fahrzeug noch nicht fährt.

Offenbart ist ein Fahrantrieb für ein Fahrzeug mit einem Fahrzeugmotor, der eine Motorwelle aufweist, die über eine Kupplung mit einem Getriebe verbundenen ist. Dabei ist eine von einer Abtriebswelle des Getriebes antreibbare hydraulische Konstantpumpe vorgesehen, von der über zumindest einen hydraulischen Konstantmotor ein damit verbundenes Fahrzeugrad antreibbar ist. Der erfindungsgemäße Fahrantrieb hat weiterhin zumindest eine hydraulische Verstellpumpe, die direkt von der Motorwelle des Fahrzeugmotors angetrieben wird. Von dieser bzw. diesen Verstellpumpe(n) wird ebenfalls über den zumindest einen Konstantmotor das damit verbundene Fahrzeugrad angetrieben. Dadurch ist mit geringem vorrichtungstechnischem Aufwand (insbesondere bei den Druckleitungen, Kupplungen und den Ventilen) eine maximale Flexibilität des Zusatzantriebes geschaffen. Weiterhin können die zusätzliche angetriebenen Fahrzeugräder mit einem Drehmoment beaufschlagt werden, auch wenn sich der Fahrzeugmotor im Leerlauf befindet und/oder über das Getriebe noch kein Gang eingelegt ist.

### Bezugszeichenliste

- 1: Fahrzeugmotor
- 2: Kupplung
- 4: Getriebe
- 6: Abtriebswelle
- 8: Differenzialgetriebe
- 10: Hinterrad
- 12: Konstantpumpe
- 14: Motorwelle
- 16; 116, 117: Verstellpumpe
- 12a, 16a, 20a, 21a;:
- 112a, 113a, 116a, 117a: Hochdruckanschluss (bei Vorwärtsfahrt)
- 12b, 16b, 20b, 21b;:
- 112b, 113b, 116b, 117b: Niederdruckanschluss (bei Vorwärtsfahrt)
- 18, 19: Vorderrad
- 20, 21: Konstantmotor
- 22; 122, 123: Hochdruckteitung (bei Vorwärtsfahrt)
- 24; 124, 125: Niederdruckleitung (bei Vorwärtsfahrt)
- 112: Zweikreis-Konstantpumpe

## Patentansprüche

1. Fahrantrieb für ein Fahrzeug mit eine Fahrzeugmotor (1), der eine Motorwelle (14) aufweist, die direkt oder indirekt Ober eine Kupplung (2) mit einem Getriebe (4) verbundenen ist, wobei von einer Abtriebswelle (6) des Getriebes (4) eine hydraulische Konstantpumpe (12; 112) antreibbar ist, von der über zumindest einen hydraulischen Konstantmotor (20, 21) ein damit verbundenes Fahrzeugrad (18,19) antreibbar ist, **dadurch gekennzeichnet, dass** von der Motorwelle (14) zumindest eine hydraulische Verstellpumpe (16; 116, 117) antreibbar ist, von der über den zumindest einen Konstantmotor (20, 21) das damit verbundene Fahrzeugrad (18,19) antreibbar ist.

2. Fahrantrieb nach Anspruch 1 mit zwei Konstantmotoren (20, 21), denen jeweils ein Fahrzeugrad (18, 19) zugeordnet ist.

3. Fahrantrieb nach Anspruch 2 mit einer Verstellpumpe (16), wobei die Hochdruckanschlüsse (12a, 16a) der Konstantpumpe (12) und der Verstellpumpe (16) über eine gemeinsame Leitung (22) mit den Hochdruckanschlüssen (20a, 21a) der beiden Konstantmotoren (20, 21) verbunden sind, während die Niederdruckanschlüsse (20b, 21b) der beiden Konstantmotoren (20, 21) über eine gemeinsame Leitung (24) mit den Niederdruckanschlüssen (12b, 16b) der Konstantpumpe (12) und der Verstellpumpe (16) verbunden sind.

4. Fahrantrieb nach Anspruch 2 mit zwei Verstellpumpen (116, 117), wobei die Konstantpumpe eine Zweikreis-Konstantpumpe (112) mit zwei Hochdruckanschlüssen (112a, 113a) und zwei Niederdruckanschlüssen (112b, 113b) ist, und wobei ein Hochdruckanschluss (112a) der Zweikreis-Konstantpumpe (112) und ein Hochdruckanschluss (116a) einer Verstellpumpe (116) mit dem Hochdruckanschluss (20a) des einen Konstantmotors (20) verbunden sind, während der andere Hochdruckanschluss (113a) der Zweikreis-Konstantpumpe (112) und der Hochdruckanschluss (117a) der anderen Verstellpumpe mit dem Hochdruckanschluss (21a) der anderen Konstantmotors (21) verbunden sind.

5. Fahrantrieb nach Anspruch 4, wobei der Niederdruckanschluss (20b) des eine Konstantmotors (20) mit dem Niederdruckanschluss (116b) der einen Verstellpumpe (116) und mit einem Niederdruckanschluss (112b) der Zweikreis-Konstantpumpe (112) verbunden ist, während der Niederdruckanschluss (21b) des anderen Konstantmotors (21) mit dem Niederdruckanschluss (117b) der anderen Verstellpumpe (117) und mit dem anderen Niederdruckanschluss (113b) der Zweikreis-Konstantpumpe (112) verbunden ist.

6. Fahrantrieb nach Anspruch 4 oder 5, wobei die beiden Hochdruckanschlüsse (112a, 113a) und/oder die beiden Niederdruckanschlüsse (112b, 113b) der Zweikreis-Konstantpumpe (112) verbindbar sind.

7. Fahrantrieb nach einem der Ansprüche 4 bis 6, wobei die Zweikreis-Konstantpumpe ein Radialkolbenpumpe ist.

8. Fahrantrieb nach einem der vorangegangenen Ansprüche, wobei die Konstantpumpe (12; 112) deaktivierbar oder blockierbar ist.

9. Fahrantrieb nach einem der Ansprüche 2 bis 8, wobei die beiden Konstantmotoren (20, 21) und die zugeordneten Fahrzeugräder (18, 19) in Fahrtrichtung des Fahrzeugs gesehen vorne angeordnet sind, und wobei weitere in Fahrtrichtung des Fahrzeugs gesehen hinten angeordnete Fahrzeugräder (10) durch die Abtriebswelle (6) des Getriebes (4) antreibbar sind.

10. Fahrantrieb nach Anspruch 9, wobei die Konstantpumpe (12; 112) koaxial mit der Antriebswelle (6) des Getriebes (4) oder an einem Nebenabtrieb des Getriebes (4) angeordnet ist.

11. Fahrantrieb nach einem der vorangegangenen Ansprüche, wobei der Fahrzeugmotor (1) von einer Brennkraftmaschine gebildet ist.
